# EUROPEAN PATENT APPLICATION

(11) **EP 2 544 376 A1**
(43) Date of publication of application: **09.01.2013**
(21) Application number: 10848676.2
(22) Date of filing: 29.03.2010
(51) Int. Cl.: H04B 1/12

(54) **DATA PROCESSING METHOD, SYSTEM AND RECEIVER**

(71) Applicant: Huawei Technologies Co., Ltd., Shenzhen, Guangdong 518129 (CN)
(72) Inventor: LI, Liangchuan, Shenzhen Guangdong 518129 (CN)
(74) Representative: Schmitz, Alexander
(86) International application number: PCT/CN2010/071389
(87) International publication number: WO 2011/120215

(57) **Abstract**

The present invention provides a data processing method, a data processing system and a receiver. The method includes: performing optical-to-electrical conversion processing on a received current optical data signal, to generate a current electric data signal; performing analog-digital conversion processing on the current electric data signal, to generate a current data block; performing equalization processing on the current data block according to a previous second output data block, to generate a current first output data block, where the previous second output data block is generated by performing forward error correction decoding processing on a previous first output data block, and the previous first output data block is generated by performing equalization processing on a previous data block of the current data block; and performing forward error correction decoding processing on the current first output data block, to generate a current second output data block. According to the data processing method, the data processing system, and the receiver, no training sequence needs to be adopted to perform equalization processing on a data block, and therefore no training sequence needs to be added in the data block, which thereby improves the data transmission efficiency.

## Description

### FIELD OF THE INVENTION

Embodiments of the present invention relate to the field of optical communications, and in particular to a data processing method, a data processing system, and a receiver.

### BACKGROUND OF THE INVENTION

With the increase of the single-wavelength transmission rate, distortion of an optical data signal in an optical fiber transmission process influences the performance of a high-speed optical transmission system. In order to solve the problem of the distortion of the optical data signal in the optical fiber transmission process, the optical data signal is generally processed by employing a distortion compensation technology based on processing in the electric domain. The distortion compensation technology is to process the optical data signal to form a data block, and perform equalization processing on the data block by an equalizer. The equalizer can effectively compensate various distortion effects, for example, dispersion or polarization mode dispersion, of the optical data signal in the transmission process.

In the prior art, the equalizer performs equalization processing on the data block generally based on a training sequence (Training Sequence), and accordingly the training sequence needs to be inserted in the data block at a transmitting end. After a receiving end receives the optical data signal sent from the transmitting end, the optical data signal is converted into a data block, correlation processing needs to be performed on the data block to find the training sequence inserted in the data block, and then the equalizer obtains a tap coefficient set according to the training sequence found in the data block, and performs equalization processing on the data block according to the tap coefficient set.

However, in the solution in the prior art, the equalization processing on the data block can be implemented only after the training sequence is inserted in the data block. The insertion of the training sequence in the data block decreases the data transmission efficiency.

### SUMMARY OF THE INVENTION

Embodiments of the present invention provide a data processing method, a data processing system, and a receiver, which are used to improve the data transmission efficiency.

An embodiment of the present invention provides a data processing method, which includes:
performing optical-to-electrical conversion processing on a received current optical data signal, to generate a current electric data signal;
performing analog-digital conversion processing on the current electric data signal, to generate a current data block;
performing equalization processing on the current data block according to a previous second output data block, to generate a current first output data block, where the previous second output data block is generated by performing forward error correction decoding processing on a previous first output data block, and the previous first output data block is generated by performing equalization processing on a previous data block of the current data block; and
performing forward error correction decoding processing on the current first output data block, to generate a current second output data block.

An embodiment of the present invention provides a receiver, which includes an optical-to-electrical converter, an analog-digital converter, an equalizer, and a forward error correction decoder.

The optical-to-electrical converter is configured to perform optical-to-electrical conversion processing on a received current optical data signal, to generate a current electric data signal.

The analog-digital converter is configured to perform analog-digital conversion processing on the current electric data signal, to generate a current data block.

The equalizer is configured to perform equalization processing on the current data block according to a previous second output data block output by the forward error correction decoder, to generate a current first output data block, where the previous second output data block is generated by the forward decoding corrector performing forward error correction decoding processing on a previous first output data block, and the previous first output data block is generated by the equalizer performing equalization processing on a previous data block of the current data block.

The forward error correction decoder is configured to perform forward error correction decoding processing on the current first output data block, to generate a current second output data block.

An embodiment of the present invention provides a data processing system, which includes a transmitter and the foregoing receiver.

The transmitter is configured to send a current optical data signal.

In the data processing method, the data processing system, and the receiver provided in the embodiments, equalization processing is performed on the current data block according to the previous second output data block, and decoding and error correction processing is performed on the current first output data block, to generate the current second output data block. In the embodiments, equalization processing and decoding and error correction processing may be performed on the previous data block of the current data block to generate the previous second output data block, and equalization processing is performed on the current data block according to the previous second output data block, so that no training sequence needs to be adopted to perform equalization processing on the data block, and therefore no training sequence needs to be added in the data block, which thereby improves the data transmission efficiency.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a data processing method according to a first embodiment of the present invention;
FIG. 2a is a flow chart of a data processing method according to a second embodiment of the present invention;
FIG. 2b is a schematic structural diagram of a data block according to an embodiment of the present invention;
FIG. 2c is a schematic diagram showing a burst error present in a data block of a long code word according to an embodiment of the present invention;
FIG. 2d is a schematic diagram showing a burst error present in a data block of a short code word according to an embodiment of the present invention;
FIG. 3 is a schematic structural diagram of a receiver according to a third embodiment of the present invention;
FIG. 4a is a schematic structural diagram of a receiver according to a fourth embodiment of the present invention;
FIG. 4b is a schematic structural diagram of a filter processing apparatus according to an embodiment of the present invention; and
FIG. 5 is a schematic structural diagram of a data processing system according to a fifth embodiment of the present invention.

### DETAILED DESCRIPTION OF THE EMBODIMENTS

In order to make the objectives, technical solutions, and advantages of the embodiments of the present invention clearer, the technical solutions of the present invention will be clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

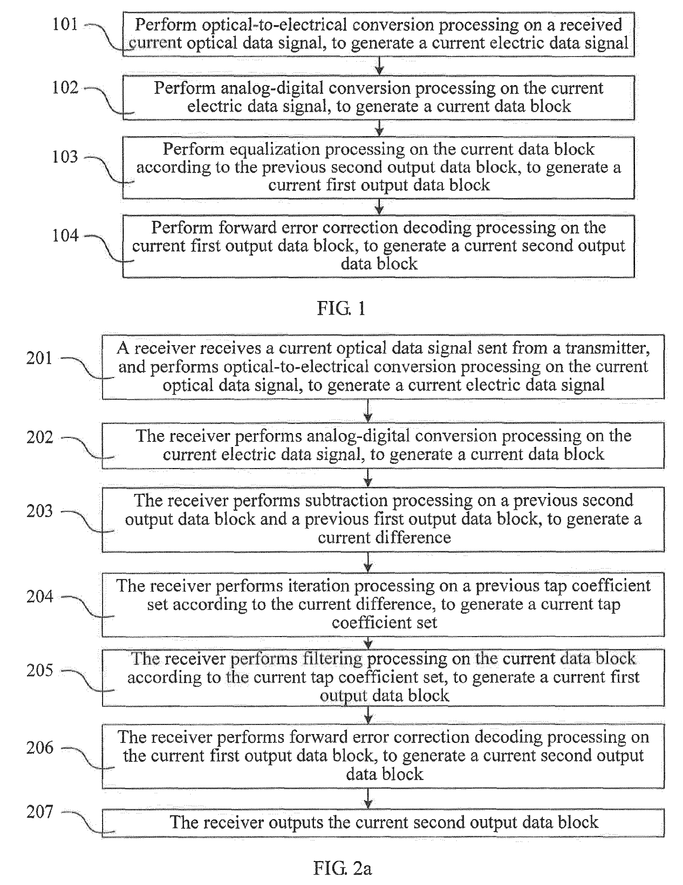

FIG. 1 is a flow chart of a data processing method according to a first embodiment of the present invention. As shown in FIG. 1, the method includes:
Step 101: Perform optical-to-electrical conversion processing on a received current optical data signal, to generate a current electric data signal.
   Steps in this embodiment may be performed by a receiver. In this embodiment, the receiver may receive a current optical data signal sent by a transmitter, and perform optical-to-electrical conversion processing on the received current optical data signal, to generate a current electric data signal. In this embodiment, the performing the optical-to-electrical conversion processing on the current optical data signal may specifically be: performing optical-to-electrical conversion processing based on coherence detection on the current optical data signal.
   In the embodiment of the present invention, the current optical data signal sent by the transmitter includes a forward error code (Forward Error Code, abbreviated as FEC hereinafter) overhead.
Step 102: Perform analog-digital conversion processing on the current electric data signal, to generate a current data block.
Step 103: Perform equalization processing on the current data block according to a previous second output data block, to generate a current first output data block, where the previous second output data block is generated by performing forward error correction decoding processing on a previous first output data block, and the previous first output data block is generated by performing equalization processing on a previous data block of the current data block.
   In this embodiment, the receiver performs equalization processing on the previous data block of the current data block, to generate the previous first output data block; performs forward error correction decoding processing on the previous first output data block, to generate the previous second output data block; and performs equalization processing on the current data block according to the previous second output data block, to generate the current first output data block.
Step 104: Performs forward error correction decoding processing on the current first output data block, to generate a current second output data block.
   In the data processing method provided in the embodiment, equalization processing is performed on the current data block according to the previous second output data block, and forward error correction decoding processing is performed on the current first output data block, to generate the current second output data block. In this embodiment, equalization processing and forward error correction decoding processing may be performed on the previous data block of the current data block to generate the previous second output data block, and equalization processing is performed on the current data block according to the previous second output data block, so that no training sequence needs to be adopted to perform equalization processing on the data block, and therefore no training sequence needs to be added in the data block, which thereby improves the data transmission efficiency.

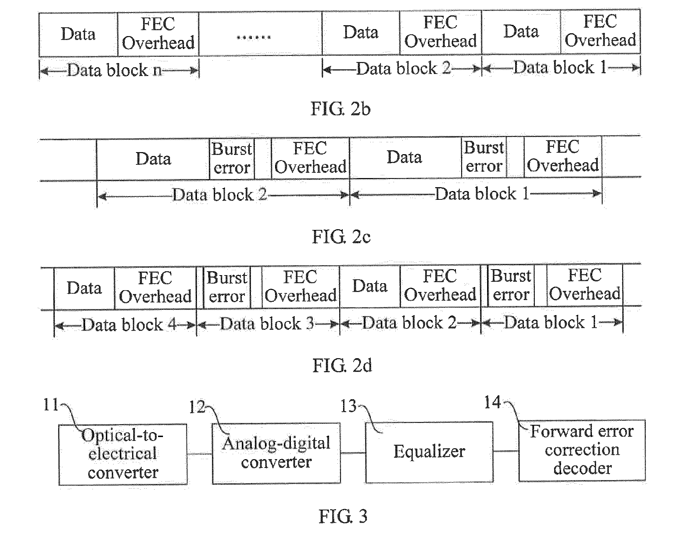

   FIG. 2a is a flow chart of a data processing method according to a second embodiment of the present invention. As shown in FIG. 2, the method includes:
Step 201: A receiver receives a current optical data signal sent by a transmitter, and performs optical-to-electrical conversion processing on the current optical data signal, to generate a current electric data signal.
Step 202: The receiver performs analog-digital conversion processing on the current electric data signal, to generate a current data block.
   In this embodiment, for the structure of the data block, reference may be made to FIG. 2b. FIG. 2b is a schematic structural diagram of a data block according to an embodiment of the present invention. As shown in FIG. 2b, FIG. 2b shows n consecutive data blocks, that is, data block 1, data block 2, ... and data block n. Each data block includes an FEC overhead and data (data) corresponding to the FEC overhead. The current data block may be any one of the data blocks, for example, if the current data block is data block 2, a previous data block of the current data block is data block 1. In this embodiment, the current data block includes a current FEC overhead and current data corresponding to the current FEC overhead, and the previous data block includes a previous FEC overhead and previous data corresponding to the previous FEC overhead.
Step 203: The receiver performs subtraction processing on a previous second output data block and a previous first output data block, to generate a current difference, where the previous second output data block is generated by the receiver performing forward error correction decoding processing on the previous first output data block, and the previous first output data block is generated by the receiver performing equalization processing on the previous data block of the current data block.
   In this embodiment, the receiver performs equalization processing on the previous data block of the current data block, to generate the previous first output data block. The receiver performs forward error correction decoding processing on the previous first output data block, to generate the previous second output data block.
Step 204: The receiver performs iteration processing on a previous tap coefficient set according to the current difference, to generate a current tap coefficient set.
   A tap coefficient set may be used for filtering the data block. In this embodiment, both the previous tap coefficient set and the current tap coefficient set may be used for filtering.
   Specifically, the receiver may perform iteration processing on each tap coefficient in the previous tap coefficient set according to the current difference, to generate each tap coefficient in the current tap coefficient set.
   The receiver may perform iteration processing on the previous tap coefficient set through a least mean square (Least Mean Square, abbreviated as LMS hereinafter) algorithm, to generate the current tap coefficient set.
   For example, the receiver performs iteration processing on the previous tap coefficient set H(m) according to a formula H(m+1)= H(m)+u*X(n)* error(m), to generate the current tap coefficient set H(m+1), where u is a step factor, and u may be a pre-defmed constant; X(n) is a current input vector for performing equalization processing, and the current input vector is formed by the current data block; and error(m) is the current difference, m is a positive integer, and n is a positive integer.
   Specifically, H(m+1) may be expressed as [h^{m+1}₁, h^{m+1}₂ ...h^{m+1}ₙ], and H(m) may be expressed as [h^{m}₁, h^{m}₂ ... h^{m}_{n]}, where h^{m+1}ₙ is a tap coefficient in the current tap coefficient set, and h^{m}ₙ is a tap coefficient in the previous tap coefficient set. X(n) may be expressed as [x₁ x₂... x_{n]}. Accordingly, the formula H(m+1)= H(m)+u*X(n)* error(m) may be further expressed as [h^{m+1}₁ h^{m+1}₂ ...h^{m+1}ₙ]= [h^{m}₁ h^{m}₂ ...h^{m}ₙ]+u*[x₁ x₂... xₙ] * error(m).
   In practical applications, the receiver may also perform iteration processing on the previous tap coefficient set through other algorithms which are not enumerated herein, to generate the current tap coefficient set.
Step 205: The receiver performs filtering processing on the current data block according to the current tap coefficient set, to generate a current first output data block.
   In this embodiment, the receiver may perform filtering processing on the current data block through a formula Y(n) =H(m)'* X(n). H(m) is a vector representing the current tap coefficient set, X(n) is a current input vector formed by the current data block, and Y(n) is a current output value obtained through filtering according the formula, and the current output value forms the current first output data block. H(m)' is obtained by transposing the vector H(m), for example, when H(m) is a row vector, H(m)' is a column vector.
   Specifically, the receiver transposes the vector representing the current tap coefficient set, and multiplies the transposed vector by the current input vector formed by the current data block, to generate the current first output data block.
   In practical applications, the receiver may also perform filtering processing on the current data block through other manners which are not enumerated herein, to generate the current first output data block.
Step 206: The receiver performs forward error correction decoding processing on the current first output data block, to generate a current second output data block.
   In the process that the receiver performs forward error correction decoding processing on the current first output data block, if it is found through query that the current first output data block includes an error, the error is corrected.
Step 207: The receiver outputs the current second output data block.

In this embodiment, the execution sequence of the steps is only an example, and in practical applications, the execution sequence of the steps may be changed as required.

In step 206 in this embodiment, if the receiver finds through query that the current first output data block includes an error, and the error in the current first output data block is a burst error (Burst Error), which indicates that the receiver cannot correct the current first output data block, the receiver does not correct the error in the current first output data block in the process of performing forward error correction decoding processing on the current first output data block. Furthermore, the receiver does not use the current second output data block for the step of performing subtraction processing on the current second output data block and the current first output data block to generate a next difference.

When a channel is changed, a burst error (Burst Error) caused by the change of the channel is present in the data block. If the burst error is present in the data block, the data block cannot be used in the process of generating a difference, which causes that the receiver cannot perform iteration processing on the tap coefficient. When a code word in the data block is a long code word, for example, the length of the data block is greater than 100000 bits, the burst error is easily present in multiple consecutive data blocks. When the burst error is present in multiple consecutive data blocks, none of the multiple consecutive data blocks can be used for generating the difference, which causes that the iteration efficiency of the receiver on the tap coefficient set is decreased, so that the capability of performing equalization processing on the data block by the receiver is lowered. FIG. 2c is a schematic diagram showing a burst error present in a data block of a long code word according to an embodiment of the present invention. As shown in FIG. 2c, when the channel is changed, a burst error is present in data block 1 and data block 2. In this embodiment, if the previous data block is data block 1, the current data block is data block 2. If the burst error is present in both the previous data block and the current data block, the generated previous second output data block and current second output data block also include the burst error, so that the previous second output data block cannot be used for generating the current difference, and the current second output data block cannot be used for generating the next difference either, causing that the receiver cannot perform iteration processing on the tap coefficient set, and the iteration efficiency on the tap coefficient set is decreased.

Furthermore, in order to improve the iteration efficiency of the receiver on the tap coefficient set, the code word of the data block in the embodiment of the present invention is a short code word, for example, the length of the data block includes 100 bits to 100000 bits. In this embodiment, the length of the current data block includes 100 bits to 100000 bits, and the length of the previous data block includes 100 bits to 100000 bits. FIG. 2d is a schematic diagram showing a burst error present in a data block of a short code word according to an embodiment of the present invention. As shown in FIG. 2d, as the code word of the data block is a short code word, when the channel is changed, the burst error is present in data block 1 and data block 3, which avoids the presence of the burst error in consecutive data blocks, and improves the iteration efficiency of the receiver on the tap coefficient set, so as to improve the capability of the receiver for performing equalization processing on the data block, and improve the quality of the data block output after the equalization processing.

In the data processing method provided in this embodiment, the receiver performs, according to the current difference generated by performing subtraction processing on the previous second output data block and the previous first output data block, update processing on the previous tap coefficient set to generate the current tap coefficient; performs, according to the current tap coefficient set, iteration processing on the current data block to generate the current first output data block; and performs forward error correction decoding processing on the current first output data block, to generate the current second output data block. In this embodiment, equalization processing and forward error correction decoding processing may be performed on the previous data block of the current data block to generate the previous second output data block, and the current difference is generated according to the previous second output data block and the previous first output data block, so that the receiver performs equalization processing on the current data block according to the current difference. Therefore, no training sequence needs to be adopted to perform equalization processing on the current data block, so that no training sequence needs to be added in the data block, which thereby improves the data transmission efficiency.

As no training sequence needs to be added in the data block, a training sequence insertion device does not need to be set at the transmitting end, which thereby lowers the cost.

In the prior art, the difference is calculated according to the training sequence in the data block, so that the receiver performs equalization processing on the data block according to the calculated difference. Therefore, if the receiver cannot obtain the training sequence from the data block correctly, the difference cannot be calculated precisely, so that the processing performance of the receiver on the data block is decreased. In this embodiment, the receiver generates the current difference by using the previous second output data block after the forward error correction decoding processing, which ensures the precision of the generated difference, and thereby improves the processing performance of the receiver on the data block.

In this embodiment, the code word of the data block is a short code word, which avoids the problem that the data block cannot be used to generate the difference because the burst error is present in consecutive data blocks, and improves the iteration efficiency of the receiver on the tap coefficient set, thereby improving the capability of the receiver for performing equalization processing on the data block, and improving the quality of the data block output after the equalization processing.

FIG. 3 is a schematic structural diagram of a receiver according to a third embodiment of the present invention. As shown in FIG. 3, the receiver includes an optical-to-electrical converter 11, an analog-digital converter 12, an equalizer 13, and a forward error correction decoder 14.

The optical-to-electrical converter 11 performs optical-to-electrical conversion processing on a received current optical data signal, to generate a current electric data signal.

The analog-digital converter 12 performs analog-digital conversion processing on the current electric data signal, to generate a current data block.

The equalizer 13 performs equalization processing on the current data block according to a previous second output data block output by the forward error correction decoder 14, to generate a current first output data block. The previous second output data block is generated by the forward error correction decoder 14 performing forward error correction decoding processing on a previous first output data block, and the previous first output data block is generated by the equalizer 13 performing equalization processing on a previous data block of the current data block.

The forward error correction decoder 14 performs forward error correction decoding processing on the current first output data block, to generate a current second output data block.

The receiver provided in this embodiment may be configured to implement the data processing method provided in the first embodiment.

The receiver provided in this embodiment may perform equalization processing on the current data block according to the previous second output data block, and perform forward error correction decoding processing on the current first output data block, to generate the current second output data block. In this embodiment, equalization processing and forward error correction decoding processing may be performed on the previous data block of the current data block to generate the previous second output data block, and equalization processing is performed on the current data block according to the previous second output data block, so that no training sequence needs to be adopted to perform equalization processing on the data block, and therefore no training sequence needs to be added in the data block, which thereby improves the data transmission efficiency.

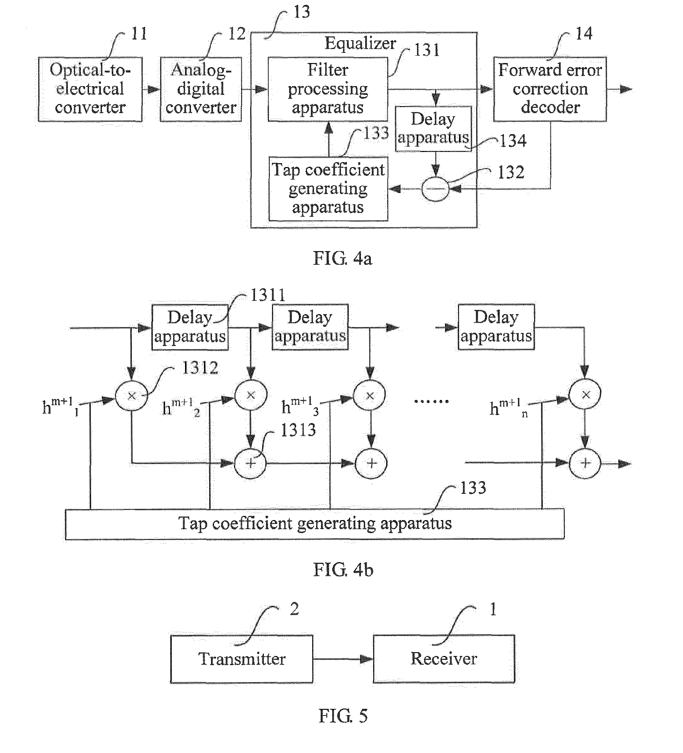

FIG. 4a is a schematic structural diagram of a receiver according to a fourth embodiment of the present invention. As shown in FIG. 4a, the receiver includes an optical-to-electrical converter 11, an analog-digital converter 12, an equalizer 13, and a forward error correction decoder 14. The equalizer 13 includes a filter processing apparatus 131, a difference generating apparatus 132, and a tap coefficient generating apparatus 133.

The optical-to-electrical converter 11 performs optical-to-electrical conversion processing on a received current optical data signal, to generate a current electric data signal, and outputs the current electric data signal to the analog-digital converter 12.

The analog-digital converter 12 performs analog-digital conversion processing on the current electric data signal, to generate a current data block, and outputs the current data block to the filter processing apparatus 131.

The forward error correction decoder 14 performs forward error correction decoding processing on a previous first output data block output by the filter processing apparatus 131 to generate a previous second output data block and output the previous second output data block, and outputs the previous second output data block to the difference generating apparatus 132. The previous first output data block is generated by the filter processing apparatus 131 performing filtering processing on a previous data block of the current data block according to a previous tap coefficient set generated by the difference generating apparatus 132. Specifically, after performing filtering processing on the previous data block according to the previous tap coefficient set and generating the previous first output data block, the filter processing apparatus 131 outputs the previous first output data block to the forward error correction decoder 14, and outputs the previous first output data block to the difference generating apparatus 132. Further, to make the previous first output data block and the previous second output data block reach the difference generating apparatus 132 at the same time, a delay apparatus 134 connected separately to the filter processing apparatus 131 and the difference generating apparatus 132 may be set in the equalizer 13. The delay apparatus 134 receives the previous first output data block output by the filter processing apparatus 131, and sends, with a delay, the previous first output data block to the difference generating apparatus 132.

The difference generating apparatus 132 performs subtraction processing on the previous second output data block and the previous first output data block, to generate a current difference, and outputs the current difference to the tap coefficient generating apparatus 133.

The tap coefficient generating apparatus 133 performs iteration processing on the previous tap coefficient set according to the current difference, to generate a current tap coefficient set, and outputs the current tap coefficient set to the filter processing apparatus 131. The tap coefficient generating apparatus 133 may perform iteration processing on the previous tap coefficient set H(m) according to a formula: H(m+1)= H(m)+u*X(n)* error(m), to generate the current tap coefficient set H(m+1), where u is a step factor, and u may be a pre-defmed constant; X(n) is a current input vector for performing equalization processing, and the current input vector is formed by the current data block; and error(m) is the current difference, m is a positive integer, and n is a positive integer. Specifically, H(m+1) may be expressed as [h^{m+1}₁, h^{m+1}₂ ...h^{m+1}ₙ], and H(m) may be expressed as [h^{m}₁, h^{m}₂ ...h^{m}ₙ], where h^{m+1}n is a tap coefficient in the current tap coefficient set, and h^{m}ₙ is a tap coefficient in the previous tap coefficient set. X(n) may be expressed as [x₁ x₂... xₙ]. Accordingly, the formula H(m+1)= H(m)+u*X(n)* error(m) may be further expressed as [h^{m+1}₁ h^{m+1}₂ ...h^{m+1}ₙ]= [h^{m}₁ h^{m}₂ ... h^{m}ₙ]+u*[x₁ x₂... xₙ]*error(m). In practical applications, the tap coefficient generating apparatus 133 may also perform iteration processing on the previous tap coefficient set through other algorithms which are not enumerated herein, to generate the current tap coefficient set.

The filter processing apparatus 131 performs filtering processing on the current data block according to the current tap coefficient set, to generate a current first output data block, outputs the current first output data block to the forward error correction decoder 14, and outputs the current first output data block to the difference generating apparatus 132.

The forward error correction decoder 14 performs forward error correction decoding processing on the current first output data block, to generate a current second output data block. The forward error correction decoder 14 outputs the current second output data block, and outputs the current second output data block to the difference generating apparatus 132, so that the difference generating apparatus 132 can perform subtraction processing on the current second output data block and the current first output data block output by the filter processing apparatus 131, to generate a next difference. In the process that the forward error correction decoder 14 performs the forward error correction decoding processing on the current first output data block, if it is found through query that the current first output data block includes an error, correction processing is performed on the error.

In this embodiment, for the structure of the filter processing apparatus 131, reference may be made to FIG. 4b. FIG. 4b is a schematic structural diagram of a filter processing apparatus according to an embodiment of the present invention. As shown in FIG. 4b, the filter processing apparatus 131 includes multiple delay modules 1311, multiple multipliers 1312 and multiple adders 1313. In this embodiment, n delay modules 1311, n multipliers 1312, and n adders 1313 are taken as an example. The current tap coefficient set output by the tap coefficient generating apparatus 133 includes n current tap coefficients h^{m+1}₁ to h^{m+1}ₙ, and each current tap coefficient is output to a corresponding multiplier 1312. The multiplier 1312 multiplies the current data block by the current tap coefficient h1, to obtain a multiplication result, and outputs the multiplication result to the adder 1313. Each delay module 1311 delays the current data block, and outputs the delayed current data block to the multiplier 1312 connected to the delay module 1311, and the multiplier 1312 multiplies the delayed current data block by the received tap coefficient, to obtain a multiplication result, and outputs the multiplication result to the adder 1313. Each adder 1313 adds the received multiplication results, to finally obtain the current first output data block. For example, the foregoing process may be expressed through a formula Y(n) =H(m)'* X(n). The filter processing apparatus 131 multiplies a vector H(m) representing the current tap coefficient set and a current input vector formed by the current data block X(n), to obtain a current output value Y(n), where the current output value forms the current first output data block. H(m)' is obtained by transposing the vector H(m) representing the current tap coefficient set, for example, when H(m) is a row vector, H(m)' is a column vector. Specifically, the filter processing apparatus 131 transposes the vector representing the current tap coefficient set, and then multiplies the transposed vector by the current input vector formed by the current data block input in the filter processing apparatus 131, to generate the current first output data block. In practical applications, the receiver may also filter the current data block through other manners which are not enumerated herein, to generate the current first output data block.

In this embodiment, the length of the current data block includes 100 bits to 100000 bits, and the length of the previous data block includes 100 bits to 100000 bits.

In this embodiment, the current data block includes a current FEC overhead and current data corresponding to the current FEC overhead, and the previous data block includes a previous FEC overhead and previous data corresponding to the previous FEC overhead. Reference may be made to description in the second embodiment for details, which are not repeated herein.

The receiver provided in this embodiment can be configured to implement the data processing method provided in the second embodiment.

The receiver provided in this embodiment performs iteration and update processing on the previous tap coefficient set according to the current difference generated by performing subtraction processing on the previous second output data block and the previous first output data block, to generate the current tap coefficient set; performs filtering processing on the current data block according to the current tap coefficient set, to generate the current first output data block; and performs forward error correction decoding processing on the current first output data block, to generate the current second output data block. In this embodiment, the receiver may perform equalization processing and forward error correction decoding processing on the previous data block of the current data block to generate the previous second output data block, and generate the current difference according to the previous second output data block and the previous first output data block, so that the receiver performs equalization processing on the current data block according to the current difference, no training sequence needs to be adopted to perform equalization processing on the current data block, and therefore, no training sequence needs to be added in the data block, which thereby improves the data transmission efficiency. As no training sequence needs to be added in the data block, a training sequence insertion device does not need to be set at the transmitting end, which thereby lowers the cost. In the prior art, the difference is calculated according to the training sequence in the data block, so that the receiver performs equalization processing on the data block according to the calculated difference. Therefore, if the receiver cannot obtain the training sequence from the data block correctly, the difference cannot be calculated precisely, so that the processing performance of the receiver on the data block is decreased. In this embodiment, the receiver generates the current difference by using the previous second output data block after the error correction processing, which ensures the precision of the generated difference, and thereby improves the processing performance of the receiver on the data block. In this embodiment, the code word of the data block is a short code word, which avoids the problem that the data block cannot be used to generate the difference because the burst error is present in consecutive data blocks, and improves the iteration efficiency of the receiver on the tap coefficient, thereby improving the capability of performing equalization processing on the data block by the receiver, and improving the quality of the data block output after the equalization processing.

FIG. 5 is a schematic structural diagram of a data processing system according to a fifth embodiment of the present invention. As shown in FIG. 5, the system includes a receiver 1 and a transmitter 2.

The transmitter 2 is configured to send a current optical data signal.

The receiver 1 may be the receiver in the third embodiment or the fourth embodiment, and is not repeated herein.

The receiver in the data processing system provided in this embodiment performs equalization processing on a current data block according to a previous second output data block, and performs forward error correction decoding processing on a current first output data block, to generate a current second output data block. In this embodiment, the receiver may perform equalization processing and forward error correction decoding processing on a previous data block of the current data block, to generate the previous second output data block, and perform equalization processing on the current data block according to the previous second output data block, so that no training sequence needs to be adopted to perform equalization processing on the data block, and therefore no training sequence needs to be added in the data block, which thereby improves the data transmission efficiency.

Those of ordinary skill in the art should understand that all or a part of the steps of the method according to the embodiments may be implemented by a program instructing relevant hardware. The program may be stored in a computer readable storage medium. When the program is run, the steps of the method according to the embodiments are performed. The storage medium includes any medium that is capable of storing program codes, such as a ROM, a RAM, a magnetic disk, and an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the present invention.

## Claims

1. A data processing method, comprising:
performing optical-to-electrical conversion processing on a received current optical data signal, to generate a current electric data signal;
performing analog-digital conversion processing on the current electric data signal, to generate a current data block;
performing equalization processing on the current data block according to a previous second output data block, to generate a current first output data block, wherein the previous second output data block is generated by performing forward error correction decoding processing on a previous first output data block, and the previous first output data block is generated by performing equalization processing on a previous data block of the current data block; and
performing forward error correction decoding processing on the current first output data block, to generate a current second output data block.

2. The method according to claim 1, wherein the performing the equalization processing on the current data block according to the previous second output data block, to generate the current first output data block comprises:
performing subtraction processing on the previous second output data block and the previous first output data block, to generate a current difference;
performing, according to the current difference, iteration processing on a previous tap coefficient set used for filtering, to generate a current tap coefficient set used for filtering; and
performing filtering processing on the current data block according to the current tap coefficient set, to generate the current first output data block.

3. The method according to claim 1 or 2, wherein the length of the current data block comprises 100 bits to 100000 bits, and the length of the previous data block comprises 100 bits to 100000 bits.

4. The method according to claim 1 or 2, wherein the current data block comprises a current forward error code FEC overhead and current data corresponding to the current FEC overhead, and the previous data block comprises a previous FEC overhead and previous data corresponding to the previous FEC overhead.

5. A receiver, comprising an optical-to-electrical converter, an analog-digital converter, an equalizer, and a forward error correction decoder, wherein:
the optical-to-electrical converter is configured to perform optical-to-electrical conversion processing on a received current optical data signal, to generate a current electric data signal;
the analog-digital converter is configured to perform analog-digital conversion processing on the current electric data signal, to generate a current data block;
the equalizer is configured to perform equalization processing on the current data block according to a previous second output data block output by the forward error correction decoder, to generate a current first output data block, wherein the previous second output data block is generated by the forward decoding corrector performing forward error correction decoding processing on a previous first output data block, and the previous first output data block is generated by the equalizer performing equalization processing on a previous data block of the current data block; and
the forward error correction decoder is configured to perform forward error correction decoding processing on the current first output data block, to generate a current second output data block.

6. The receiver according to claim 5, wherein the equalizer comprises a filter processing apparatus, a difference generating apparatus, and a tap coefficient generating apparatus, wherein
the difference generating apparatus is configured to perform subtraction processing on the previous second output data block output by the forward error correction decoder and the previous first output data block output by the filter processing apparatus, to generate the current difference, and output the current difference to the tap coefficient generating apparatus, wherein the previous first output data block is generated by the filter processing apparatus performing filtering processing on the previous data block of the current data block according to the previous tap coefficient set generated by the difference generating apparatus;
the tap coefficient generating apparatus is configured to perform iteration processing on the previous tap coefficient set according to the current difference, to generate a current tap coefficient set, and output the current tap coefficient set to the iteration processing apparatus; and
the filter processing apparatus is configured to perform filtering processing on the current data block according to the current tap coefficient set, to generate the current first output data block, output the current first output data block to the forward error correction decoder, and output the current first output data block to the difference generating apparatus.

7. The receiver according to claim 6, wherein the equalizer further comprises:
a delay apparatus, configured to receive the previous first output data block output by the filter processing apparatus, and send, with a delay, the previous first output data block to the difference generating apparatus.

8. The receiver according to any one of claims 5 to 7, wherein the length of the current data block comprises 100 bits to 100000 bits, and the length of the previous data block comprises 100 bits to 100000 bits.

9. The receiver according to any one of claims 5 to 7, wherein the current data block comprises a current forward error code FEC overhead and current data corresponding to the current FEC overhead, and the previous data block comprises a previous FEC overhead and previous data corresponding to the previous FEC overhead.

10. A data processing system, comprising a transmitter and a receiver, wherein
the transmitter is configured to send a current optical data signal; and
the receiver comprises the receiver according to any one of claims 5 to 9.
